# DEMANDE DE BREVET EUROPEEN

(11) **EP 4 718 402 A1**
(43) Date de publication de la demande: **01.04.2026**
(21) Numéro de dépôt: 25182719.2
(22) Date de dépôt: 13.06.2025
(51) Int. Cl.: G06V 40/16

(54) **PROCÉDÉ DE DÉTERMINATION DE CORRECTIFS AUX ÉCARTS STATISTIQUES D'IDENTIFICATION D'UN SYSTÈME D'IDENTIFICATION BIOMÉTRIQUE**

(30) Priorité: 30.09.2024 FR 2410476
(71) Demandeur: Idemia Public Security France, 92400 Courbevoie (FR)
(72) Inventeur: BOUATAY, Wassim, 92400 COURBEVOIE (FR); BAUDRY, Christelle Maria France, 92400 COURBEVOIE (FR); DESPIEGEL, Vincent, 92400 COURBEVOIE (FR)
(74) Mandataire: IPS

(57) **Abrégé**

Procédé **(500)** de détermination de correctifs aux écarts statistiques d'identification d'un système **(200)** d'identification biométrique par reconnaissance faciale et/ou piéton, ledit procédé **(500)** comprend les étapes suivantes :
(a) Définir **(501)** un ensemble de catégories **(C1-Cn),** à chaque catégorie correspondant au moins une caractéristique d'apparence physique ;
(b) Extraire **(502),** pour chaque individu **(101)** de la pluralité d'individus, au moins une caractéristique d'apparence physique à partir d'au moins une image dudit individu **(101)** ;
(c) Attribuer **(503** / **600),** à chaque individu **(101),** au moins une catégorie **(C1-Cn)** en fonction d'au moins un critère relatif **(a-z)** à la caractéristique d'apparence physique extraite ;
(d) Répartir **(504 / 600),** pour chaque catégorie **(Cp),** chaque individu **(101)** de la pluralité d'individus en deux groupes **(E, R)** selon l'échec **(E)** ou la réussite **(R)** de leur identification par le système **(200)** d'identification biométrique ;
(e) Calculer **(505 / 700),** pour chaque catégorie **(Cp),** un nombre **(N[Cp])** d'individus à sélectionner dans le groupe **(R)** correspondant à la réussite **(R)** de l'identification de manière à ce que les proportions relatives des individus dans le groupe **(E)** correspondant à l'échec **(E)** de l'identification soient sensiblement égales entre tous les critères **(a-z)** relatifs à ladite catégorie **(Cp).**

## Description

### Domaine technique

La présente invention concerne un procédé et un dispositif de détermination de correctifs aux écarts statistiques d'identification d'un système d'identification biométrique. Elle concerne également un système d'identification biométrique comprenant un tel dispositif.

### Arrière-plan technique

Il est courant de vérifier l'identité des personnes à l'aide de protocoles d'identification fondés sur la comparaison de certaines de leurs caractéristiques biométriques. L'exploitation de ces protocoles requiert généralement une étape préalable d'enrôlement par laquelle un individu s'enregistre auprès d'une entité avec laquelle il partage un certain nombre d'informations biométriques et d'informations relatives à son identité.

Tant l'enrôlement que l'identification reposent sur une étape d'acquisition de caractéristiques biométriques de l'individu. A cet effet, l'individu se présente devant un le dispositif d'acquisition d'un système d'acquisition qui en acquiert une image d'une zone d'intérêt dans laquelle certaines caractéristiques anthropomorphiques et/ou anthropométriques pertinentes sont susceptibles d'être extraites pour une analyse biométrique ultérieure par une unité de traitement biométrique. Les processus d'identification sont généralement automatisés afin de permettre notamment une identification à flux libre, sans que l'individu ait besoin de se présenter de lui-même devant le dispositif d'acquisition. Les zones d'accès restreint et les zones de contrôle aux frontières sont des exemples de lieux dans lesquelles les systèmes automatiques d'identification à flux libre sont implémentés.

### Résumé de l'invention

Il a été constaté que les méthodes algorithmiques utilisées dans les protocoles d'identification peuvent être affectées de bais qui entraînent un certain nombre d'échecs d'identification. L'intervention d'un opérateur humain est alors nécessaire pour terminer, ou vérifier ou compléter l'identification. Ces biais proviennent d'une détection incorrecte ou d'une analyse erronée des informations biométriques selon certaines caractéristiques d'apparence physique de l'individu. Ces caractéristiques d'apparence physiques peuvent être notamment des caractéristiques innées d'apparence physique, par exemple des caractéristiques physiologiques physiques et/ou ethniques telles que l'âge, le genre, la couleur de peau, ou des caractéristiques adventices d'apparence physique, par exemple des éléments rapportés, éventuellement sous la forme de transformation corporelles, telle que des lunettes de vue, des tatouages, des piercings, des vêtements portés sur ou autour de la tête.

Les origines des erreurs de détection ou d'analyse sont diverses. Elles peuvent résulter d'une sous-représentation de certains groupes d'individus dans les ensembles de données d'apprentissage des algorithmes, ou encore d'effets optiques liées aux conditions environnantes du dispositif d'acquisition du système d'identification telles que, par exemple, un éclairage inapproprié provoquant des reflets sur des surfaces réfléchissantes comme les verres des lunettes de vue.

Un inconvénient majeur de ces biais est la discrimination de certains groupes d'individus selon leurs caractéristiques d'apparence physique, notamment leurs caractéristiques physiologiques physiques et/ou ethniques. Il en résulte un traitement non équitable de ces individus lors des contrôles d'identité et/ou d'accès puisqu'ils risquent de faire l'objet d'un contrôle plus fréquent par un opérateur humain.

Selon un premier aspect de l'invention, il est fourni un procédé mis en œuvre par un dispositif de traitement de données, de détermination de correctifs aux écarts statistiques d'identification d'un système d'identification biométrique par reconnaissance faciale et/ou piéton, le procédé prend, en donnée d'entrée, un ensemble d'images comprenant au moins une image de chaque individu d'une pluralité d'individus acquise par ledit système d'identification biométrique et l'ensemble des états de réussite ou d'échec d'identification de chaque individu par ledit système d'identification biométrique, ledit procédé fournit, en donnée de sortie, un ensemble de nombres d'individus à sélectionner dans chaque catégorie d'un ensemble de catégories relatives, chacune, à au moins une caractéristique d'apparence physique, ledit procédé comprend les étapes suivantes :
(a) Définir un ensemble de catégories, à chaque catégorie correspondant au moins une caractéristique d'apparence physique ;
(b) Extraire, pour chaque individu de la pluralité d'individus, au moins une caractéristique d'apparence physique à partir d'au moins une image dudit individu ;
(c) Attribuer, à chaque individu, au moins une catégorie en fonction d'au moins un critère relatif à la caractéristique d'apparence physique extraite ;
(d) Répartir, pour chaque catégorie, chaque individu de la pluralité d'individus en deux groupes selon l'échec ou la réussite de leur identification par le système d'identification biométrique ;
(e) Calculer, pour chaque catégorie, un nombre d'individus à sélectionner dans le groupe correspondant à la réussite de l'identification de manière à ce que les proportions relatives des individus dans le groupe correspondant à l'échec de l'identification soient sensiblement égales entre tous les critères relatifs à ladite catégorie.

Selon certains modes de réalisation, le procédé comprend, en outre, avant l'étape a, une étape d'extraction, à partir de la pluralité d'individus, d'un échantillon d'individus comprenant des individus représentatifs des caractéristiques d'apparence physique auxquelles correspond à au moins une catégorie, les étapes b à e étant ensuite appliqués sur ledit échantillon d'individus.

Selon certains modes de réalisation, l'ensemble d'images comprenant au moins une image de chaque individu d'une pluralité d'individus acquise par ledit système d'identification biométrique et l'ensemble des états de réussite ou d'échec d'identification de chaque individu par ledit par ledit système d'identification biométrique sont un échantillon de l'historique d'identification dudit système d'identification biométrique sur une période fixe de temps.

Selon certains modes de réalisation, que l'étape b d'extraction d'au moins une caractéristique d'apparence physique et l'étape c d'attribution d'au moins une catégorie sont réalisé à l'aide d'un réseau convolutif de neurones préalablement entrainés.

Selon certains modes de réalisation, la caractéristique d'apparence physique est choisie parmi des caractéristiques innées d'apparence physique et/ou des caractéristiques adventices d'apparence physique.

Dans un deuxième aspect de l'invention, il est fourni un dispositif de traitement de données comprenant des moyens pour mettre en œuvre un procédé selon le premier aspect de l'invention.

Dans un troisième aspect de l'invention, il est fourni un programme informatique comprenant des instructions qui, lorsque le programme est exécuté par un dispositif de traitement de données, conduisent celui-ci à mettre en œuvre un procédé selon le premier aspect de l'invention.

Dans un quatrième aspect de l'invention, il est fourni un support de stockage lisible par dispositif de traitement de données comprenant des instructions qui, lorsqu'elles sont exécutées par un dispositif de traitement de données, conduisent celui-ci à mettre en œuvre un procédé selon le premier aspect de l'invention.

Dans un cinquième aspect de l'invention, il est fourni un système d'identification biométrique comprenant un dispositif de traitement de données selon le deuxième aspect de l'invention.

Dans un sixième aspect de l'invention, il est fourni un procédé de correction des écarts statistiques d'identification d'un système d'identification biométrique par reconnaissance faciale et/ou piéton, ledit procédé comprenant les étapes suivantes :
(a) Déterminer les correctifs aux écarts statistiques d'identification du système d'identification biométrique à l'aide d'un procédé selon le premier aspect de l'invention ;
(b) Sélectionner, de préférence aléatoirement, pour chaque catégorie individus dans le groupe correspondant à la réussite à l'identification ;
(c) Contrôler les individus sélectionnés par un agent humain.

Dans un septième aspect de l'invention, il est fourni une utilisation d'un procédé selon le premier aspect de l'invention pour la correction des écarts statistiques d'identification d'un système d'identification biométrique par reconnaissance faciale et/ou piéton dans une zone de contrôle aux frontières.

### Brève description des dessins

[Fig. 1] est une représentation schématique d'un exemple de zone de contrôle aux frontières comprenant une sous-zone d'identification biométrique en flux libre.
[Fig. 2] est une représentation schématique d'un exemple de système d'identification biométrique.
[Fig. 3] est une représentation schématique d'un exemple de dispositif de traitement biométrique.
[Fig. 4] est un exemple de représentation graphique des fréquences de réussite et d'échec d'identification, par un système d'identification biométrique, d'une pluralité d'individus selon plusieurs catégories de caractéristiques d'apparence physique.
[Fig. 5] est un ordinogramme d'un procédé selon un mode de réalisation de l'invention.
[Fig. 6] est une représentation graphique schématique des fréquences de réussite et d'échec d'identification, par un système d'identification biométrique, d'une pluralité d'individus selon plusieurs catégories de caractéristiques d'apparence physique, avant correction.
[Fig. 7] est une représentation graphique des fréquences de réussite et d'échec d'identification de la Fig. 6 après correction à l'aide d'un procédé selon l'invention.

### Description détaillée des modes de réalisation

Dans le cadre de la présente divulgation, les modes de réalisation sont décrits dans le contexte général d'un ou plusieurs matériels ou dispositifs capables d'exécuter des instructions préchargées telles que, par exemple, des instructions exécutables par ordinateur pour l'exécution de modules de programme. Les modules de programme peuvent comprendre une ou plusieurs routines, programmes, objets, variables, commandes, scripts, fonctions, applications, composants, structures de données qui peuvent exécuter des tâches particulières ou mettre en œuvre des types particuliers de données abstraites.

Certains modes de réalisation peuvent également être mis en œuvre dans des environnements informatiques distribués où les tâches sont exécutées par des dispositifs distants de traitement de données qui sont reliés par un réseau de communication. Dans un environnement informatique distribué, les modules de programme peuvent se trouver sur des supports de stockage informatique locaux et/ou distants, y compris des dispositifs de stockage mémoire.

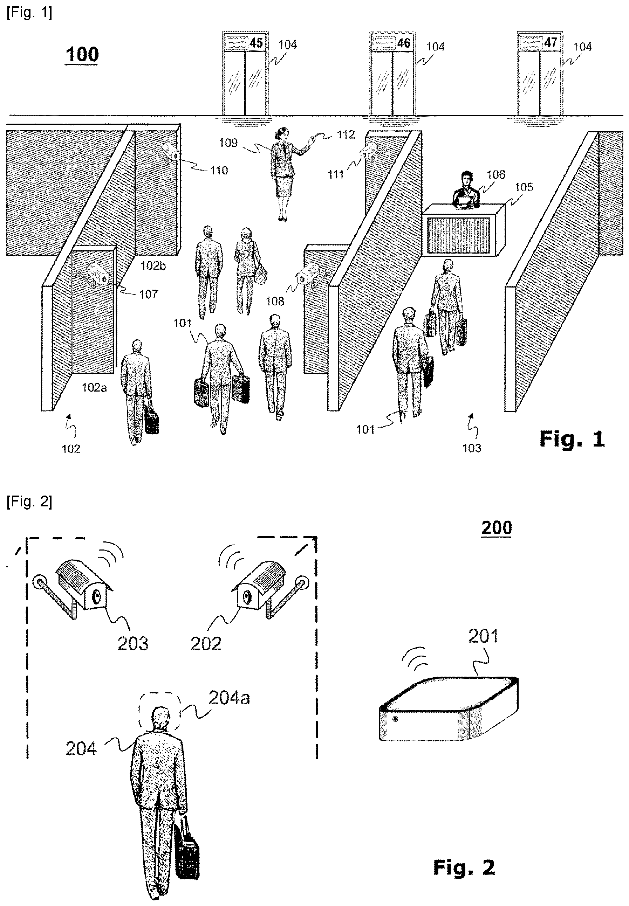

En référence à la **Fig. 1**, une zone **100** de contrôle aux frontières, telle qu'un aéroport est susceptible d'en être pourvu, les voyageurs **101** ont généralement la possibilité de choisir entre une sous-zone **102** de consentement à l'identification biométrique et une sous-zone **103** de non-consentement à l'identification biométrique, pour accéder aux portes **104** d'embarquement, lors d'un départ de territoire, ou de débarquement, lors d'une arrivée sur le territoire.

La sous-zone **103** de non-consentement à l'identification biométrique consiste en un simple couloir de passage dans lequel les voyageurs **101** patientent avant de se présenter devant un guichet **105** où un agent humain **106** est chargé de vérifier leur d'identité. Selon la législation nationale en vigueur, en respect du souhait des voyageurs de ce que leurs caractéristiques anthropomorphiques et/ou anthropométriques ne fassent pas l'objet d'une analyse biométrique, la sous-zone **103** de non-consentement peut être dépourvue de dispositifs d'acquisition et/ou d'enregistrement susceptibles de fournir des épreuves de ces caractéristiques, ou si elle en est pourvue, ces dispositifs ne sont pas configurés pour transmettre ces épreuves à un système d'analyse biométrique.

La sous-zone **102** de consentement à l'identification biométrique est, en revanche, pourvue d'un ou plusieurs dispositifs **107**, **108** d'acquisition et/ou d'enregistrement d'épreuves des caractéristiques anthropomorphiques et/ou anthropométriques des voyageurs **101** afin d'en procéder à l'analyse. Dans l'exemple de zone de contrôle représenté sur la **Fig. 1**, les dispositifs **107**, **108** d'acquisition sont deux caméras monoculaires aériennes disposées de part et d'autre d'une première salle **102a** que les voyageurs **101** sont invités à traverser. Les deux caméras **107**, **108** sont orientées selon un angle de vue plongeant afin d'acquérir une ou plusieurs épreuves des visages des voyageurs **101** qui ont préalablement procédé à leur enrôlement, par exemple lors d'une étape antérieure d'enregistrement (« check-in »). Les épreuves sont ensuite transmises à un dispositif de traitement biométrique (non représenté) qui en extrait des gabarits biométriques d'épreuve pour ensuite les comparer aux gabarits biométriques de référence d'une base de données et identifier les voyageurs **101** sur base de cette comparaison.

Après avoir traversé la première salle **102a**, les voyageurs entre dans une deuxième salle **102b** attenante à la première, dans laquelle les voyageurs non identifiés **101** par le système d'identification sont dirigées vers le guichet **105** de contrôle par un agent humain **109** de contrôle pour une indentification manuelle. Parallèlement, les voyageurs **101** correctement identifiés sont autorisés à accéder aux portes **104** d'embarquement ou de débarquement. La deuxième salle **102b** peut comprendre un dispositif de contrôle composé, dans l'exemple, de deux caméras **110**, **111** de surveillance, disposées de part et d'autre de la salle, afin de prévenir toute tentative, par un voyageur non identifié, d'accéder aux portes **104** d'embarquement ou de débarquement.

En référence à la **Fig. 2**, un système **200** d'identification biométrique susceptible d'être utilisé pour la mise en œuvre d'une identification en flux libre dans une zone **100** de contrôle aux frontières peut être un système à reconnaissance faciale et/ou piéton. Le système **200** comprend un dispositif **201** de traitement biométrique et un ou plusieurs dispositifs **202, 203** d'enregistrement vidéographique et/ou photographique, tels qu'une ou plusieurs caméras monoculaires. Pour des raisons de sécurité, le dispositif **201** de traitement biométrique est situé à distance des dispositifs **202, 203** d'enregistrement vidéographique et/ou photographique, généralement dans un local dédié. Il communique avec des dispositifs **202, 203** d'enregistrement vidéographique par tout dispositif adapté de télécommunication filaire ou électromagnétique.

Le ou les dispositifs **202, 203** d'enregistrement sont configurés pour procéder à l'enregistrement d'une image d'une zone **204a** d'intérêt d'un individu **204** dans laquelle certaines caractéristiques anthropomorphiques et/ou anthropométriques pertinentes de l'individu **204** sont susceptibles d'être extraites et converties en un gabarit biométrique d'épreuve par le dispositif **201** de traitement biométrique. Le dispositif **201** de traitement biométrique procède ensuite à la comparaison du gabarit biométrique d'épreuve avec un ou plusieurs gabarits biométriques de référence d'une base de données. S'il y a une correspondance entre le gabarit biométrique d'épreuve et au moins un gabarit biométrique de référence associé à un individu identifié dans la base de données, l'individu **104** est considéré comme identifié par le système **200** d'identification. Dans le cas contraire, l'individu **104** n'est pas considéré comme identifié. Il doit alors faire l'objet d'un contrôle manuel par un agent humain **106**.

La zone **204a** d'intérêt de l'individu **204** dépend du type de reconnaissance mise en œuvre par le système **200** d'identification biométrique. Dans le cas d'une reconnaissance faciale, la zone **204a** d'intérêt comprend le visage et/ou un ou plusieurs éléments caractéristiques du visage, tels que les yeux, la ou les commissures labiales ou encore le nez. Dans le cas d'une reconnaissance piéton, la zone **204a** d'intérêt comprend au moins la partie supérieure du corps de l'individu **204**, voire l'intégralité de son corps, et le dispositif **201** de traitement biométrique extrait un gabarit biométrique à partir d'une analyse de la posture, de la corpulence et/ou de la démarche de l'individu **104**.

Des exemples de système et procédé d'identification biométrique par reconnaissance faciale sont décrits dans ; A1 Xinyi, et al. "A survey of face recognition." arXiv preprint arXiv:2212.13038 (2022) ; US 2017/0330028 A1 [Idemia Identity and Security USA LLC] 16.11.2017 ; EP 3 285 209 A2 [Safran Identity and Security SAS] 21.02.2018.

Des exemples de système et procédé d'identification biométrique par reconnaissance faciale sont décrits dans Ye, Mang, et al. "Deep learning for person re-identification: A survey and outlook." IEEE transactions on pattern analysis and machine intelligence 44.6 (2021): 2872-2893 ; US 2017/0316255 A1 [Panasonic Intellectual Property Management Co Ltd Wang] 02.11.2017 ; WO 2019/ 188111 A1 [NEC CORP] 03.10.2019 ; US 2015/0193686 [Tata Consultancy Services Ltd] 09.07.2015.

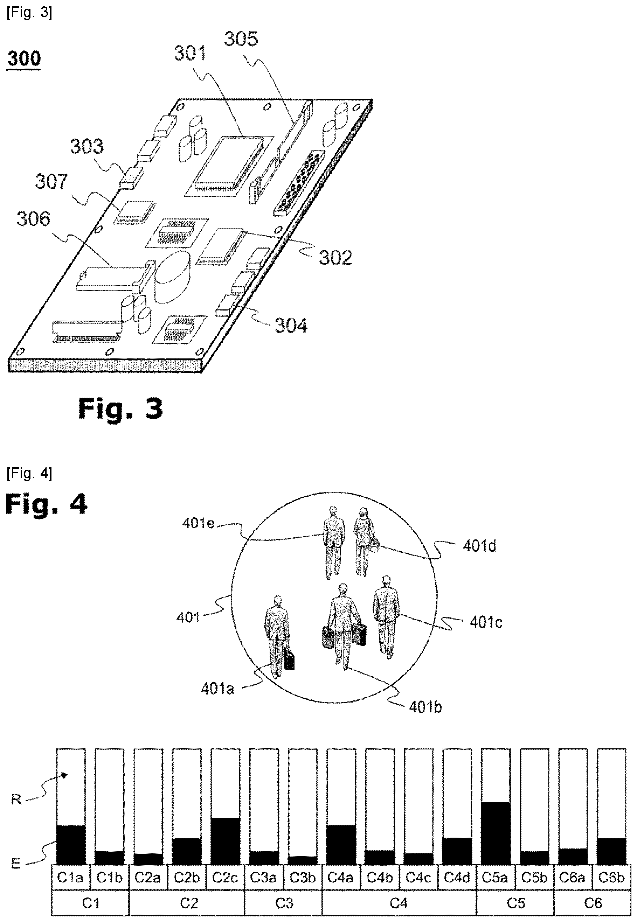

En référence à la **Fig. 3**, un dispositif **201** de traitement biométrique est généralement un dispositif **300** de traitement de données comprenant des moyens pour la mise en œuvre d'un procédé d'identification biométrique tel que décrit précédemment. Ce dispositif 300 comprend une ou plusieurs unités centrales de traitement (CPU) **301** et/ou un ou plusieurs processeurs graphiques (GPU) **302**, un module physique **303** de communication à distance, un ou plusieurs modules physique **304** d'entrée / sortie pour l'échanges de données avec des dispositifs externes, un support **305** de stockage transitoire tel qu'une mémoire vive (RAM), un support **306** d'enregistrement non-transitoire, et des bus de communication (non représentés) pour le transfert de données entre les composants internes du dispositif **300**. Il peut également comprendre un élément sécurisé **308** pour le stockage de clés cryptographiques, l'exécution d'algorithmes de chiffrement, et/ou le stockage et/ou le chiffrement de tout autre algorithme et/ou donnée dont la sécurité et la confidentialité doit être préservées, par exemple une base de données de gabarits biométriques de référence.

Le dispositif **203** de traitement biométrique permet l'exécution d'un ou plusieurs modules de programmes comprenant des instructions qui, lorsque le ou les modules de programme sont exécutés, conduisent ledit dispositif **203** de traitement biométrique à mettre en œuvre d'un procédé d'identification biométrique tel que décrit précédemment. Le ou les modules de programme peuvent être écrits en tout langage de programmation, compilé ou interprété. Ils peuvent faire partie d'une solution logicielle, c'est-à-dire d'une collection d'instructions exécutables, de codes, de scripts ou autres et/ou de bases de données.

Comme expliqué précédemment, les méthodes algorithmiques utilisées dans les protocoles d'identification biométrique peuvent être affectées de bais qui entraînent un certain nombre d'échecs d'identification. Ces biais proviennent d'une détection incorrecte ou d'une analyse erronée des informations biométriques selon certaines caractéristiques innées et/ou adventices d'apparence physique de l'individu. Il résulte une discrimination de certains groupes d'individus selon leurs caractéristiques d'apparence physique, notamment leurs caractéristiques physiologiques physiques et/ou ethniques. Ces groupes sont alors plus fréquemment susceptibles de faire l'objet d'un traitement non équitable lors des contrôles automatiques d'identité, un opérateur humain devant intervenir pour pallier les échecs de l'identification automatique et procéder manuellement à la vérification.

En référence à la **Fig. 4**, une ou plusieurs catégories **C1-C6** relatives à une ou plusieurs caractéristiques d'apparence physique peut être attribué à chaque individu d'un groupe 401 de voyageurs **401a-d**. A chaque catégorie, discrète ou continue, correspond l'application d'un critère relatif à une caractéristique d'apparence physique. Par « caractéristique d'apparence physique », il est entendu toute caractéristique innée ou adventice de l'apparence physique d'un groupe d'individus susceptible de permettre une distinction entre les individus dudit groupe sur la base d'au moins un critère objectif propre à cette caractéristique. Des exemples de caractéristique innée d'apparence physique sont des caractéristiques physiologiques physiques et/ou ethniques du corps telles que l'âge, la taille, le genre, la couleur de peau, la forme du visage, ou la couleur ou la forme des yeux. Des exemples de caractéristique adventice d'apparence physique sont des éléments rapportés, éventuellement sous la forme de transformation corporelles, telle que des lunettes de vue, des tatouages, des piercings, des vêtements portés sur ou autour de la tête.

Dans l'exemple de la **Fig. 4****,** la première catégorie **C1** correspond au port **C1a** ou non **C1b** de lunette de vue, la deuxième catégorie **C2** comprend trois intervalles **C2a**, **C2b**, **C3c** de valeurs de teinte de peau, la troisième catégorie **C3** correspond à la présence **C3a** ou non **C3b** de tatouage sur le visage, la quatrième catégorie **C4** comprend cinq intervalles **C4a**, **C4b**, **C4c**, **C4d**, **C4e** de valeurs d'âge, la cinquième catégorie **C5** correspond au port **C5a** ou non **C5b** d'un couvre-chef tel qu'un chapeau, un voile ou un foulard, et la sixième catégorie **C6** correspond au genre biologique masculin **C6a** et au genre biologique féminin **C6b**.

A chaque catégorie **C1-C6** correspond l'application d'un critère relatif à une caractéristique d'apparence physique : à la première catégorie première catégorie **C1** correspond le critère du port **C1a** ou du non-port **C1b** de lunette de vue ; à la deuxième catégorie **C2** correspond l'application d'un critère **C2a**, **C2b**, **C3c** de valeurs de teinte de peau ; à la troisième catégorie **C3** correspond l'application d'un critère de présence **C3a** ou de non-présence **C3b** de tatouage sur le visage ; à la quatrième catégorie **C4** comprend l'application d'un critère **C4a, C4b, C4c, C4d, C4e** de valeurs d'âge ; à la cinquième catégorie **C5** correspond l'application d'un critère de port **C5a** ou non-port **C5b** d'un couvre-chef ; et à la sixième catégorie **C6** correspond l'application d'un critère de genre biologique masculin **C6a** ou féminin **C6b**.

Il convient de noter que, de manière générale, pour toute catégorie associée à une caractéristique d'apparence physique susceptible de faire l'objet d'une mesure sur une échelle continue, il est possible, au lieu de sous-catégories discrètes, d'utiliser une échelle continue de valeurs avec une fonction de seuillage. Par exemple, pour les troisième C3 et cinquième **C5** catégories, au lieu d'intervalles, une échelle continue à seuils peut être utilisée pour la valeur de la teinte de peau et la valeur d'âge, respectivement.

A chaque voyageur **401a-e** du groupe **401** peut être attribué une ou plusieurs catégories **C1-C6** en appliquant au moins un critère de distinction propre à la caractéristique d'apparence physique associée à chacune des catégories **C1-C6.** A titre d'exemple, à supposer que dans le voyageur **401a** soit un homme d'une trentaine d'années, portant des lunettes au teint de peau mat sans tatouage, les catégories **C1[C1a], C2[C2c], C3[C3a], C4[C4c], C5[C5b], C6[C6a]** lui sont attribuées. Sur la **Fig. 4**, la répartition des voyageurs **401** dans les différentes catégories **C1-C6** est représentée sous la forme d'un histogramme des proportions absolues d'individus dans chaque catégorie.

Dés lors qu'un algorithme d'identification biométrique est affecté de bais, il peut échouer à identifier davantage de d'individus d'une ou plusieurs catégories plutôt que d'autre. Les individus peuvent ainsi être répartis en deux groupes **E**, **R** selon l'échec **E** ou la réussite **R** de leur identification par l'algorithme d'identification biométrique.

A titre d'exemple, parce qu'il porte des lunettes de vue et/ou qu'il a le teint mat, le voyageur **401a** peut ne pas être identifié par le système d'identification biométrique. Il devra faire alors l'objet d'une identification manuelle par un opérateur. Tout autre voyageur qui présente les mêmes caractéristiques peuvent subir un sort similaire. Une forme de discrimination a lieu pour ces personnes puisqu'elles font plus fréquemment l'objet d'un contrôle manuel.

En généralisant, sur la **Fig. 4**, de manière purement illustrative, sont présentées des proportions relatives d'échec **E** (partie noire de l'histogramme) et de réussite R (partie blanche de l'histogramme) d'identification pour chaque histogramme de proportions d'individus dans chaque catégorie **C1-C6**. Il apparaît que les voyageurs entrant dans les catégories **C1**, **C2**, **C4** et **C5** selon les critères respectifs **C1a**, **C2c**, **C4a**, **C5a** ne sont statistiquement pas identifiés plus fréquemment. Le comportement du système d'identification biométrique mettant en œuvre un algorithme d'identification biométrique biaisé peut être alors être considéré comme discriminatoire quant aux caractéristiques d'apparence physique associées à ces catégories.

L'objectif de la présente invention est de réduire, voire supprimer, les biais d'identification susceptibles d'affecter les algorithmes d'identification biométrique actuels ou futures. Un autre objectif est de fournir une solution adaptable à chaque situation dans laquelle ces algorithmes sont mis en œuvre afin de réduire le besoin de les remplacer tout ou en partie.

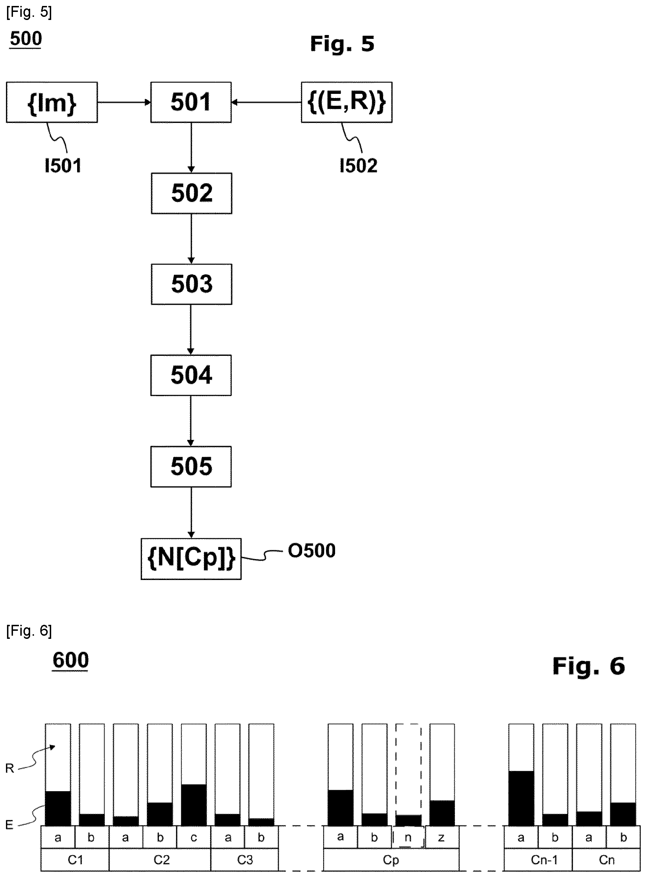

A cet effet, en référence aux **Fig. 5** & **Fig. 6** & **Fig. 7**, il est fourni un procédé **500**, mis en œuvre par un dispositif **300** de traitement de données, de détermination de correctifs aux écarts statistiques d'identification d'un système **200** d'identification biométrique par reconnaissance faciale et/ou piéton, le procédé **500** prend, en donnée d'entrée, un ensemble **I501** d'images **Im** comprenant au moins une image de chaque individu **101** d'un pluralité d'individus acquise par ledit système **200** d'identification biométrique et l'ensemble **I502** des états de réussite **R** ou d'échec **E** d'identification de chaque individu **101** par ledit système **200** d'identification biométrique, ledit procédé **500** fournit, en donnée de sortie, un ensemble **O500** de nombres **N[Cp]** d'individus à sélectionner dans chaque catégorie **Cp** d'un ensemble de catégories **C1-Cn** relatives, chacune, à au moins une caractéristique d'apparence physique, ledit procédé **500** comprend les étapes suivantes :
(a) Définir **501** un ensemble de catégories **C1-Cn**, à chaque catégorie correspondant au moins une caractéristique d'apparence physique ;
(b) Extraire **502**, pour chaque individu **101** de la pluralité d'individus, au moins une caractéristique d'apparence physique à partir d'au moins une image dudit individu **101** ;
(c) Attribuer **503** / **600**, à chaque individu **101**, au moins une catégorie **C1-Cn** en fonction d'au moins un critère relatif **a-z** à la caractéristique d'apparence physique extraite ;
(d) Répartir **504** / **600**, pour chaque catégorie **Cp**, chaque individu **101** de la pluralité d'individus en deux groupes **E**, **R** selon l'échec **E** ou la réussite **R** de leur identification par le système **200** d'identification biométrique ;
(e) Calculer **505** / **700**, pour chaque catégorie **Cp,** un nombre **N[Cp]** d'individus à sélectionner dans le groupe **R** correspondant à la réussite **R** de l'identification de manière à ce que les proportions relatives des individus dans le groupe **E** correspondant à l'échec **E** de l'identification soient sensiblement égales entre tous les critères **a-z** relatifs à ladite catégorie **Cp**.

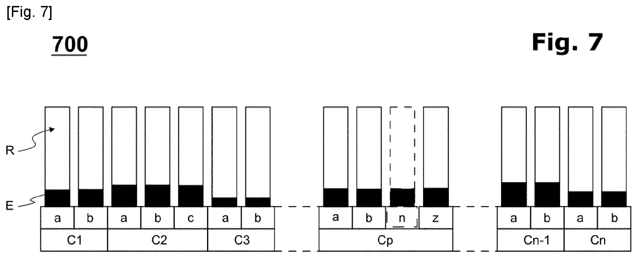

Le procédé **500** selon l'invention fournit, pour chaque catégorie **Cp,** un nombre **N[Cp]** d'individus à contrôler dans le groupe **R** correspondant à la réussite **R** de l'identification. Autrement dit, pour chaque catégorie **Cp,** un nombre **N[Cp]** d'individus correctement identifiés (groupe **R**) par le système **200** d'identification biométrique seront considérées comme non-identifiées (groupe **E**) et feront l'objet d'une identification manuelle par un agent humain **106.** Ainsi, lors d'une prochaine campagne d'identification par le système **200** d'identification biométrique, pour chaque catégorie **Cp,** les proportions relatives d'individus dans le groupe **R** seront sensiblement égales entre tous les critères **a-z** relatifs à ladite catégorie **Cp,** de manière, par exemple, à obtenir, pour chaque catégorie **Cp,** une répartition entre les réussites **R** et les échecs E telle que représentée sur l'histogramme de la **Fig. 7**.

L'ensemble **O500** de nombres **N[Cp]** calculés pour chaque **Cp** peut, par exemple, être transmis au système **200** d'identification biométrique qui procédera ensuite à la sélection, de préférence aléatoire, pour chaque catégorie **Cp,** des **N[Cp]** individus dans le groupe **R** pour une identification manuelle par un agent humain. En référence à la **Fig. 1**, dans l'exemple d'une zone **101** de contrôle aux frontières, les **N[Cp]** voyageurs **101** sélectionnés par le système **200** d'identification sont redirigés par un agent **109** de contrôle vers le guichet **105** où un agent humain **106** est chargé de vérifier leur identité. A cet effet, l'agent **109** de contrôle peut être muni d'un dispositif électronique mobile **112** sur lequel lui sont notifiés les voyageurs **101** devant faire l'objet d'une indentification manuelle, comprenant à la fois ceux sélectionnés par le système **200** d'identification biométrique et ceux que le système **200** d'identification biométrique n'est pas parvenu à identifier. De préférence, ni l'agent **109** de contrôle ni l'agent **106** d'identification n'ont connaissance de la raison, à savoir la sélection ou la non-identification, pour laquelle ces voyageurs **101** sont redirigés vers une identification manuelle.

Selon un exemple purement illustratif du procédé selon l'invention, une catégorie **C1** correspondant au genre biologique et définie. Après extraction des caractéristiques d'apparence physique pertinentes pour l'identification de leur genre, chaque individu **101** d'une pluralité d'individus est affecté à une catégorie **C1** de genre biologique en fonction de deux critères **a, b**, correspondant respectivement le genre biologique féminin **C1a** et le genre biologique masculin **C1b.** La répartition des individus en deux groupes selon l'échec **E** ou la réussite **R** de leur identification révèle, par exemple, que 4% des individus **101** du genre biologique masculin **C1b** ne sont pas identifiés et 2% des individus **101** du genre biologique féminin ne sont pas identifiés **C1a**. A supposer que le système 200 d'identification biométrique procède à l'identification d'une moyenne de 1000 individus 101 par jour comprenant 300 individus du genre biologique masculin **C1b** et 700 individus du genre biologique féminin **C1a**, 12 individus **101** du genre biologique masculin **C1b** 14 individus **101** du genre biologique féminin **C1a** ne sont donc pas identifiés. Bien que les nombres d'individus non identifiés entre les deux critères soient très proches, la proportion relative d'individus **101** du genre biologique masculin **C1b** est deux fois supérieur à celle des individus **101** du genre biologique féminin **C1a**.

Afin de rétablir l'équilibre entre les proportions relatives d'échec d'identification entre les individus du genre biologique masculin **C1b** et les individus du genre biologique féminin **C1a,** l'étape de calcul **505** / **700** permet de déterminer le nombre de personnes à sélectionner dans le groupe correspondant à la réussite **R** de l'identification pour chacun des deux critères **a, b**, correspondant respectivement le genre biologique féminin **C1a** et le genre biologique masculin **C1b.** Dans l'exemple, 39 individus **101** du genre biologique féminin **C1a** correctement identifiés et 11 individus **101** du genre biologique masculin **C1b** correctement identifiés seront sélectionnés, de préférence aléatoirement, lors de la prochaine mise en œuvre du système **200** d'identification biométrique. Les proportions relatives d'individus **101** non identifiés, ou considérés comme tel, entre les deux critères **a, b**, correspondant respectivement le genre biologique féminin **C1a** et le genre biologique masculin **C1b** seront alors sensiblement identiques. En l'occurrence, 7,67% des individus **101** du genre biologique féminin **C1a** et 7,67% des individus **101** du genre biologique masculin **C1b** ne seront pas identifiés ou considérés comme tel.

Selon le type et les performances de l'algorithme d'identification biométrique mis en œuvre par le système **200** d'identification biométrique, certaines caractéristiques d'apparence physique peuvent plus ou moins influencer le résultat de l'identification des individus 101. L'identification, par ledit système **200**, des individus **101** appartenant aux catégories relatives à ces caractéristiques d'apparence physique est donc susceptible d'échouer plus fréquemment que celle des individus des autres catégories. Par exemple, pour les raisons mentionnées précédemment, un algorithme d'identification biométrique peut davantage faillir à l'identification d'individus porteur de lunettes de vue que celle des individus présentant des caractéristiques d'apparence physique différentes. Ou encore, un algorithme d'identification biométrique peut présenter un taux d'échec d'identification acceptable pour les individus appartenant à certaines catégories mais pas pour les autres.

Aussi, selon certains modes de réalisation, le procédé comprend, en outre, avant l'étape **502**, une étape **502a** d'extraction, à partir de la pluralité d'individus, d'un échantillon d'individus comprenant des individus représentatifs des caractéristiques d'apparence physique auxquelles correspond à au moins une catégorie **Cp,** les étapes **502** à **505** étant ensuite appliqués sur ledit échantillon d'individus. Un tel échantillonnage permet de concentrer les corrections des écarts statistiques d'identification sur individus concernant lesquelles le système **200** d'identification biométrique est le plus défaillant, tout en préservant ses performances d'identification des autres individus. Parce que le procédé 5**00** limite les corrections qu'à un nombre limité de catégories d'individus, il est plus économe en ressources de calcul et donc en énergie.

Le procédé **500** selon l'invention peut être mise en œuvre en temps réel ou de manière différée par rapport à la période de fonctionnement du système **200** d'identification biométrique. Selon certains modes de réalisation, l'ensemble **I501** d'images comprenant au moins une image de chaque individu **101** d'une pluralité d'individus acquise par ledit système **200** d'identification biométrique et l'ensemble **I502** des états de réussite **R** ou d'échec **E** d'identification de chaque individu **101** par ledit par ledit système **200** d'identification biométrique sont un échantillon de l'historique d'identification dudit système **200** d'identification biométrique sur une période fixe de temps.

Lors d'une mise en œuvre en temps réel, la période fixe de temps peut, par exemple, être une période glissante régulièrement mise à jour à une fréquence donnée pour tenir compte des opérations d'identification les plus récentes au fur à mesure que le système **200** d'identification biométrique est utilisé. A chaque mise à jour, le procédé **500** selon l'invention procède à une nouvelle détermination des correctifs à appliquer audit système **200** et lui transmet un ensemble **O500** mis à jour de nombres **N[Cp]** d'individus calculés pour chaque **Cp** qu'il aura désormais à sélectionner pour une identification manuelle. Cette opération de mise à jour a lieu à une fréquence donnée, par exemple journalière, durant toute la durée de fonctionnement du système **200** d'identification biométrique.

Lors d'une mise en œuvre différée, un échantillon de l'historique d'identification du système **200** d'identification biométrique est fourni, comme donnée d'entrée, au procédé **500** selon l'invention au terme d'une campagne d'identification d'individus par ledit système 5**00**. A partir de cet échantillon, le procédé **500** selon l'invention procède à une nouvelle détermination des correctifs à appliquer audit système **200** et lui transmet un ensemble **O500** mis à jour de nombres **N[Cp]** d'individus calculés pour chaque **Cp**. Ensuite, lors de la prochaine campagne d'identification, le système **200** appliquera cette mise à jour.

A l'étape **502**, l'extraction, pour chaque individu **101** de la pluralité d'individus, au moins une caractéristique d'apparence physique à partir d'au moins une image dudit individu est réalisée à l'aide de te toute méthode adaptée. Selon certains modes préférés de réalisation, l'étape **502** d'extraction d'au moins une caractéristique d'apparence physique et l'étape **503** d'attribution d'au moins une catégorie **C1-Cn** sont réalisé à l'aide d'un réseau convolutif de neurones préalablement entrainé. Des exemples de réseaux convolutifs de neurones adaptés pour la détermination du genre et de l'âge d'une personne sont décrits dans Levi, Gil, and Tal Hassner. "Age and gender classification using convolutional neural networks." Proceedings of the IEEE conference on computer vision and pattern recognition workshops. 2015 ; Kuprashevich, Maksim, and Irina Tolstykh. "Mivolo: Multi-input transformer for age and gender estimation." International Conference on Analysis of Images, Social Networks and Texts. Cham: Springer Nature Switzerland, 2023.

Dans un deuxième aspect de l'invention, en référence à la **Fig. 3**, le procédé **500** selon l'invention peut être mise en œuvre par un dispositif **300** de traitement de données.

Dans un troisième aspect, le procédé 5**00** selon l'invention se présente sous la forme d'un programme informatique ou un module de programme informatique comprenant des instructions qui, lorsque le programme est exécuté par un dispositif 300 de traitement de données, mettent en œuvre ledit procédé **500.**

Dans un quatrième aspect de l'invention, le programme informatique ou le module de programme informatique est stocké dans un support **306** d'enregistrement non-transitoire d'un dispositif **300** de traitement de données.

Dans un cinquième aspect de l'invention, il est fourni un système **200** d'identification biométrique comprenant un dispositif **300** de traitement de données selon le deuxième aspect de l'invention. De préférence, le dispositif **300** de traitement de données est constitué par le dispositif de traitement biométrique dudit système **200**.

Le procédé **500** selon le premier aspect de l'invention et/ou le système **200** selon le cinquième aspect de l'invention peuvent être avantageusement être utilisé pour la correction des écarts statistiques d'identification d'un système **200** d'identification biométrique par reconnaissance faciale et/ou piéton dans une zone **100** de contrôle aux frontières telle que, par exemple, décrite dans le cadre de la **Fig. 1**.

A cet effet, dans un sixième aspect de l'invention, le procédé **500** selon le premier aspect de l'invention peut avantageusement être utilisé pour la mise en œuvre d'un procédé de correction des écarts statistiques d'identification d'un système **200** d'identification biométrique par reconnaissance faciale et/ou piéton. Un tel procédé de correction comprend les étapes suivantes :
(a) Déterminer les correctifs aux écarts statistiques d'identification du système **200** d'identification biométrique à l'aide d'un procédé **500** selon l'un des quelconques modes de réalisation du premier aspect de l'invention ;
(b) Sélectionner, de préférence aléatoirement, pour chaque catégorie **Cp**, **N[Cp]** individus dans le groupe **R** correspondant à la réussite à l'identification ;
(c) Contrôler les individus sélectionnés par un agent humain.

### Références

### Littérature brevet

US 2015/0193686 [Tata Consultancy Services Ltd] 09.07.2015

US 2017/0316255 A1 [Panasonic Intellectual Property Management Co Ltd Wang] 02.11.2017.

US 2017/0330028 A1 [Idemia Identity and Security USA LLC] 16.11.2017.

EP 3 285 209 A2 [Safran Identity and Security SAS] 21.02.2018

WO 2019/ 188111 A1 [NEC CORP] 03.10.2019.

### Littérature non-brevet

Levi, Gil, and Tal Hassner. "Age and gender classification using convolutional neural networks." Proceedings of the IEEE conference on computer vision and pattern recognition workshops. 2015.
Ye, Mang, et al. "Deep learning for person re-identification: A survey and outlook." IEEE transactions on pattern analysis and machine intelligence 44.6 (2021): 2872-2893.
Wang, Xinyi, et al. "A survey of face recognition." arXiv preprint arXiv:2212.13038 (2022).
Kuprashevich, Maksim, and Irina Tolstykh. "Mivolo: Multi-input transformer for age and gender estimation." International Conference on Analysis of Images, Social Networks and Texts. Cham: Springer Nature Switzerland, 2023.

## Revendications

1. Procédé **(500)**, mis en œuvre par un dispositif **(300)** de traitement de données, de détermination de correctifs aux écarts statistiques d'identification d'un système **(200)** d'identification biométrique par reconnaissance faciale et/ou piéton, le procédé **(500)** prend, en donnée d'entrée, un ensemble **(I501)** d'images **(Im)** comprenant au moins une image de chaque individu **(101)** d'un pluralité d'individus acquise par ledit système **(200)** d'identification biométrique et l'ensemble **(I502)** des états de réussite **(R)** ou d'échec **(E)** d'identification de chaque individu **(101)** par ledit par ledit système **(200)** d'identification biométrique, ledit procédé **(500)** fournit, en donnée de sortie, un ensemble **(O500)** de nombres **(N[Cp])** d'individus à sélectionner dans chaque catégorie **(Cp)** d'un ensemble de catégories **(C1-Cn)** relatives, chacune, à au moins une caractéristique d'apparence physique, ledit procédé **(500)** comprend les étapes suivantes :
(a) Définir **(501)** un ensemble de catégories **(C1-Cn)**, à chaque catégorie correspondant au moins une caractéristique d'apparence physique ;
(b) Extraire **(502)**, pour chaque individu **(101)** de la pluralité d'individus, au moins une caractéristique d'apparence physique à partir d'au moins une image dudit individu **(101)** ;
(c) Attribuer **(503** / **600)**, à chaque individu **(101)**, au moins une catégorie **(C1-Cn)** en fonction d'au moins un critère relatif **(a-z)** à la caractéristique d'apparence physique extraite ;
(d) Répartir **(504** / **600)**, pour chaque catégorie **(Cp)**, chaque individu **(101)** de la pluralité d'individus en deux groupes **(E**, **R)** selon l'échec **(E)** ou la réussite **(R)** de leur identification par le système **(200)** d'identification biométrique ;
(e) Calculer **(505** / **700)**, pour chaque catégorie **(Cp)**, un nombre **(N[Cp])** d'individus à sélectionner dans le groupe **(R)** correspondant à la réussite **(R)** de l'identification de manière à ce que les proportions relatives des individus dans le groupe **(E)** correspondant à l'échec **(E)** de l'identification soient sensiblement égales entre tous les critères **(a-z)** relatifs à ladite catégorie **(Cp)**, le nombre (**N[Cp]**) d'individus sélectionnés pour chaque catégorie (**Cp**) est transmis au système (**200**) qui procède ensuite à la sélection, lors d'une prochaine campagne d'identification, à la sélection , pour chaque catégorie (**Cp**), des (**N[Cp]**) individus dans le groupe (**R**) pour une identification manuelle par un agent humain.

2. Procédé selon la revendication 1, tel que le procédé comprend, en outre, avant l'étape **(502)**, une étape **(502a)** d'extraction, à partir de la pluralité d'individus, d'un échantillon d'individus comprenant des individus représentatifs des caractéristiques d'apparence physique auxquelles correspond à au moins une catégorie **(Cp)**, les étapes **(502)** à **(505)** étant ensuite appliqués sur ledit échantillon d'individus.

3. Procédé selon l'une des revendications 1 à 2, tel que l'ensemble **(1501)** d'images comprenant au moins une image de chaque individu **(101)** d'une pluralité d'individus acquise par ledit système **(200)** d'identification biométrique et l'ensemble **(1502)** des états de réussite **(R)** ou d'échec **(E)** d'identification de chaque individu **(101)** par ledit par ledit système **(200)** d'identification biométrique sont un échantillon de l'historique d'identification dudit système **(200)** d'identification biométrique sur une période fixe de temps.

4. Procédé selon l'une quelconque des revendications 1 à 3, tel que l'étape **(502)** d'extraction d'au moins une caractéristique d'apparence physique et l'étape **(503)** d'attribution d'au moins une catégorie **(C1-Cn)** sont réalisé à l'aide d'un réseau convolutif de neurones préalablement entrainé.

5. Procédé selon l'une quelconque des revendication 1 à 4, telle que la caractéristique d'apparence physique est choisie parmi des caractéristiques innées d'apparence physique et/ou des caractéristiques adventices d'apparence physique.

6. Dispositif **(300)** de traitement de données comprenant des moyens pour mettre en œuvre un procédé **(500)** selon l'une quelconque des revendications 1 à 5.

7. Programme informatique comprenant des instructions qui, lorsque le programme est exécuté par un dispositif **(300)** de traitement de données, conduisent celui-ci à mettre en œuvre un procédé **(500)** selon l'une quelconque des revendications 1 à 5.

8. Support **(306)** de stockage lisible par dispositif **(300)** de traitement de données comprenant des instructions qui, lorsqu'elles sont exécutées par un dispositif **(300)** de traitement de données, conduisent celui-ci à mettre en œuvre un procédé **(500)** selon l'une quelconque des revendications 1 à 5.

9. Système **(200)** d'identification biométrique comprenant un dispositif **(300)** de traitement de données selon la revendication 6.

10. Procédé de correction des écarts statistiques d'identification d'un système **(200)** d'identification biométrique par reconnaissance faciale et/ou piéton, ledit procédé comprenant les étapes suivantes :
(a) Déterminer les correctifs aux écarts statistiques d'identification du système **(200)** d'identification biométrique à l'aide d'un procédé **(500)** selon l'une quelconque des revendications 1 à 5 ;
(b) Sélectionner, de préférence aléatoirement, pour chaque catégorie **(Cp)**, **N[Cp]** individus dans le groupe **(R)** correspondant à la réussite à l'identification ;
(c) Contrôler les individus sélectionnés par un agent humain.

11. Utilisation d'un procédé **(500)** selon l'une quelconque des revendications 1 à 5 pour la correction des écarts statistiques d'identification d'un système **(200)** d'identification biométrique par reconnaissance faciale et/ou piéton dans une zone **(100)** de contrôle aux frontières.
